# EUROPEAN PATENT APPLICATION

(11) **EP 4 541 629 A1**
(43) Date of publication of application: **23.04.2025**
(21) Application number: 24207159.5
(22) Date of filing: 17.10.2024
(51) Int. Cl.: B60K 17/16, F16H 3/66, B60K 1/00

(54) **IMPROVED ELECTRIC TRACTION AXLE**

(30) Priority: 20.10.2023 IT 202300021969
(71) Applicant: FPT Industrial S.p.A., 10156 Torino (IT)
(72) Inventor: PESOLA, Fabio, 10156 TORINO (IT); TESSITORE, Marco, 10156 TORINO (IT); CANTONE, Francesco, 10156 TORINO (IT); ESPOSITO, Pietro, 10156 TORINO (IT); COLACITO, Emanuele, 10156 TORINO (IT); FEOLA, Domenico, 10156 TORINO (IT)
(74) Representative: Studio Torta S.p.A.

(57) **Abstract**

An electric traction axle/beam, e-axle/e-beam, (1) for a vehicle, comprising at least one electric machine (2), a pair of drive shafts (4', 4''), each connected to a respective wheel of the vehicle, and a transmission chain operationally connecting the electric machine (2) to the pair of drive shafts (4', 4''),
the transmission chain comprising, operationally interposed in series between a first transfer system (5), at least one speed ratio change system (6), a second transfer system (7), a third transfer system (13) and a differential group (8),
the drive shafts (4', 4'') being coaxial to a longitudinal axis (A) of the axle (1), the electric machine (2) insisting on an axis (A) parallel and distinct from the longitudinal axis (B),
said electric machine (2) being carried by one of said drive shafts (4', 4'').

## Description

### CROSS-REFERENCE TO RELATED APPLICATIONS

This patent application claims priority from Italian patent application no. 102023000021969 filed on October 20, 2023, the entire disclosure of which is incorporated herein by reference.

### TECHNICAL FIELD

The present invention relates to an axle/beam for a vehicle.

The present invention finds its preferred, though not exclusive, application in an electric traction axle, a so-called "e-axle" or "e-beam". This application will be referred to hereinafter by way of example.

### STATE OF THE PRIOR ART

As is known, there is an increasing need to reduce pollutant emissions from internal combustion engines used to operate vehicles, in particular to allow the traction thereof.

This need is even more pressing for Light Commercial Vehicles (LCV), Medium Commercial Vehicles (MCV), and Heavy Commercial Vehicles (HCV), such as trucks and motor vehicles in general.

To this end, solutions known as e-axles or e-beams, i.e., electric traction axles/beams, are known wherein the axle/beam itself carries one or more electric machines configured to exchange torque with the drive shafts of the axle, and therefore with the wheels, to supply or generate energy depending on the vehicle's usage condition.

For the sake of accuracy, it is specified that the axle is the connecting member(s) between the two wheel hubs, which performs the sole load-bearing function, whereas a beam is the connecting member(s) between the two wheel hubs, where the drive shafts and the differential are also present, and an input point for a traction torque.

Examples of such e-axles/e-beams are illustrated in patent publications US2022/0250457 A1, US 2020/0282827 A1 or US2022/0065334 A1.

These solutions involve the use of electric machines in a so-called "on-axis" configuration where, that is, the axis of the electric machine is coaxial with the axis of the drive shafts of the axle/beam.

This configuration, although advantageous from the point of view of mounting the elements directly on the axles themselves, is particularly disadvantageous from the point of view of the overall dimensions along this axial direction.

In fact, the positioning of the electric machine, which is particularly bulky, limits the positioning of other functional elements unless the longitudinal size of the axle is increased.

As it is not always possible to increase this size due to the overall dimensions of members already present on the axle (suspensions, braking system components, chassis components, wheel track limit, etc.), it is necessary to resize the transmission connecting the electric machine to the wheels, or the electric machine itself, thereby actually reducing the power and performance available at the axle or beam.

Therefore, the versatility of delivering torque and power over a wide range is compromised, a feature that is essential in order to provide an E-axle/E-beam that can be used in a variety of vehicle operating conditions.

Therefore, there is a need to provide e-axles/e-beams which can have reduced overall dimensions while maintaining an operating range in terms of torque and power that is as wide as possible in order to cover different vehicle operating conditions.

The object of the present invention is to meet the above need in an optimized and cost-effective manner.

### SUMMARY OF THE INVENTION

Said object is achieved by means of an electric traction axle/beam as claimed in the appended claims forming an integral part of the present specification.

### BRIEF DESCRIPTION OF THE DRAWINGS

For a better understanding of the present invention, a preferred embodiment is described below by way of nonlimiting example and with reference to the accompanying drawings, wherein:
- Figure 1 is a diagram showing an operational relationship between different functional systems of the electric traction axle/beam according to the invention; and
- Figure 2 is a schematic view of an electric traction axle/beam according to the invention.

### DETAILED DESCRIPTION OF THE INVENTION

For the sake of simplicity, the term axle/beam or e-axle/e-beam shall be used hereinafter to avoid repetitions as the invention is applicable to both architectures.

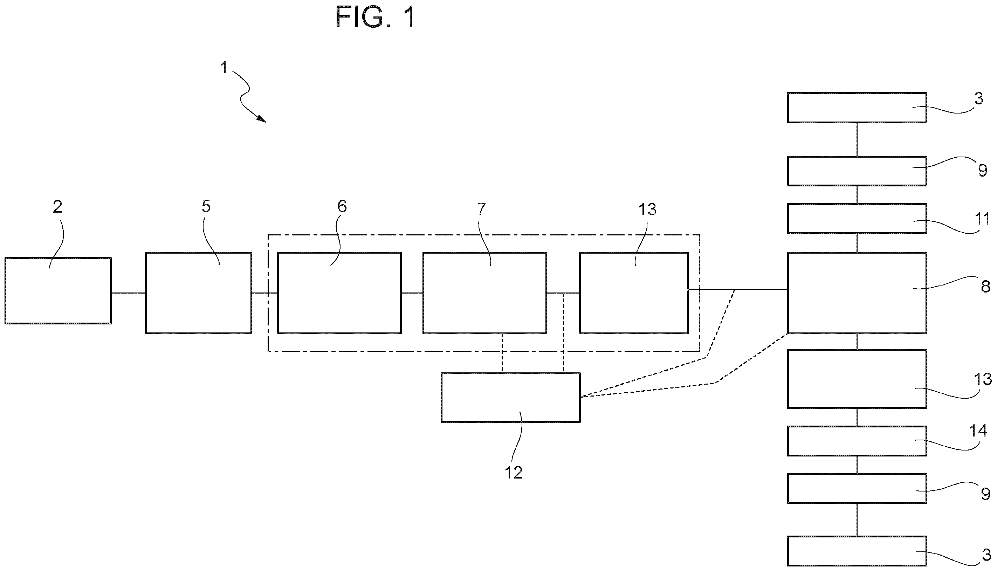

Figure 1 schematizes a torque exchange transmission chain in an electric axle/beam 1, or E-axle/E-beam, between an electric machine 2 and a pair of wheels 3 carried by drive shafts 4', 4" of the electric axle/beam 1.

The electric machine 2, as is known, is electrically connected to an energy source, such as a battery pack (not shown) of the vehicle and is configured to exchange energy with it, specifically receiving it to generate torque towards the wheels 3, or to input it into the same, receiving torque from the wheels 3.

As schematized, the transmission chain of the electric axle 1 comprises, in series between the electric machine 2 and the wheels 3, a first transfer system 5, a second transfer system 7, an additional transfer system 13, and a differential group 8.

A speed ratio change system 6 can advantageously be present between the second transfer system 7 and the differential group 8, as in the embodiment described here.

The term "transfer system" refers to a system of torque/speed variation between input and output which may have a ratio greater than, less than or equal to one between the output and the input. Advantageously, the second transfer system 7 is designed as a reducer.

The differential group 8 is interposed between the drive shafts 4', 4 ", which can be respectively connected to the wheels by a wheel hub transfer system 9.

A differential lock system 11 may be optionally provided interposed between the differential group 8 and one of the drive shafts 4', 4'', and further optionally there may be a parking brake system 12 configured to operationally cooperate with one of the second transfer system 7 and the differential group 8 to lock the movement of the electric axle 1.

Additionally, an oil distributor system 13 can optionally be provided operationally interposed between the differential group 8, one of the drive shafts 4', 4' ', and the respective wheel hub transfer system 9.

A disconnection system may also optionally be provided between the wheels 6 and the differential group 8, creating a connection or opening in one of the two drive shafts, making the vehicle towing functions possible by de facto disconnecting at least one electric machine 2 and the transmission chain upstream of the differential group 8.

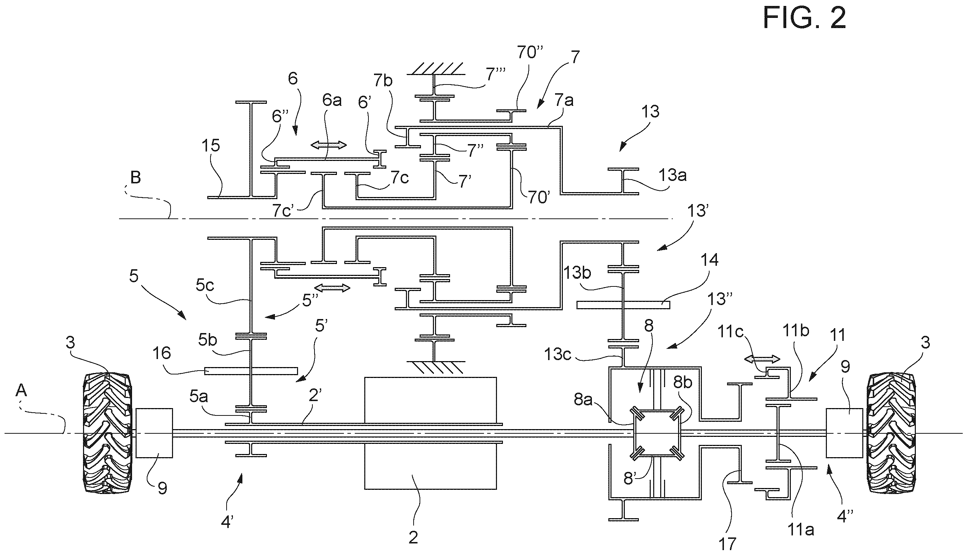

With reference to Figure 2, it is noted that the axis of an operating shaft 2' of the electric machine 2, i.e., a shaft carried by the rotor of the electric machine 2, is parallel and spaced with respect to a longitudinal axis B of the axle 1.

In particular, the electric machine 2 is arranged coaxial with the axis A of the axle 1, coaxially with the drive shafts 4' and 4''. In other words, the electric machine 2, the drive shafts 4', 4'', and the differential group 8 are coaxial with each other and the axis A, whereas the other transmission elements are coaxial with the axis B.

This configuration where the axes A, B are distinct from and parallel to each other will be hereinafter referred to as the "off-axis configuration" for the sake of brevity.

Although not shown in Figure 2, the axle/beam 1 comprises a casing suitable for housing the transmission chain described and part of the drive shafts 4', 4'' and for supporting the electric machine 2, in particular its stator. This casing defines a space suitable for housing the elements of the transmission chain described below, isolating them from the external environment.

The operating shaft 2' of the electric machine 2 is therefore carried coaxially and externally, and in a rotationally free manner in relation to the axis A of one of the drive shafts 4', 4'' ; for simplicity, in this description reference will be made to the left drive shaft 4' although it is clear that the description could be mirrored between the left and right drive shafts.

This operating shaft 2' is operationally connected via the first transfer system 5 to an input shaft 15 which is carried coaxially and free to rotate on the transmission axis B.

Advantageously, the first transfer system 5 defines at least one transmission ratio between the input shaft 15 and the operating shaft 2' and is preferably made as a parallel shaft reduction system. In detail, in the embodiment, this transmission ratio is defined by two speed steps 5', 5'' defined by respective gears.

In particular, the transfer system comprises a first gear 5' defined by a first gear wheel 5a rigidly carried by the operating shaft 2' and a second gear wheel 5b rigidly carried by a support shaft 16, and the second gear 5"' comprises a third gear wheel 5c rigidly carried by the shaft 15 and meshing with the second gear wheel 5b. Clearly, although not shown, additional gear configurations can be provided such as, for example, a configuration in which there is a fourth gear wheel 5d carried integrally by the support shaft 16 and meshing with the third gear wheel 5c, or a configuration in which the second gear wheel 5b is absent and the first gear wheel 5a meshes directly with the third gear wheel 5c.

The second transfer system 7 comprises an epicyclic transfer system, advantageously of the compound type. In the embodiment described, this compound epicyclic mechanism comprises a first sungear 7' carried in a rotationally free manner on a second sungear 70'; these sungears can be connected via the speed selector gearbox 6 which allows the input shaft 15 to be connected to a first portion 7c integral with the first sungear 7' or to a second portion 7c' integral with the second sungear 70'.

In particular, the second sungear 70' is supported in a rotationally free manner and coaxially with the transmission axis B, therefore coaxially with the input shaft 15.

The first sungear 7' meshes with a first plurality of satellites 7'', and the second sungear 70' meshes with a second plurality of satellites 70''. In this embodiment, the first plurality of satellites 7' is rigidly connected to the second plurality of satellites 70". In particular, the first plurality of satellites 7" meshes with a crown 7‴ rigidly connected to a fixed portion of the casing of the axle 1.

Both pluralities of satellites 7", 70" are carried by a same carrier 7a operationally connected to the torque of the differential group 8 as described below.

In detail, the speed selector gearbox 6 is configured in this embodiment to assume a third position in which it can connect the input shaft 15 to a portion 7b integral with the carrier 7a.

In the embodiment described, the speed selector gearbox 6 essentially comprises a sleeve 6a defining a first and a second toothing 6', 6''.

Advantageously, the second toothing 6" is configured to cooperate by sliding, thus defining a splined coupling, with the input shaft 15 along the axis A. This movement is regulated by actuating devices, which are not shown or described for brevity.

Depending on the movement along the axis A described above, the first toothing 6' can cooperate respectively with a toothing 7b rigidly carried by the carrier 7a or with a toothing 7c carried by the first sungear 7' or even with a toothing 7c' carried by the second sungear 70', thus de facto implementing the selection of three distinct and different transmission ratios.

The carrier 7a is connected via the additional transfer system 13 to the differential group 8. In particular, in the embodiment described, this additional transfer system 13 comprises a first gear 13' defined by a first gear wheel 13a rigidly carried by the carrier 7a and a second gear wheel 13b rigidly carried by a support shaft 14, and the third gear 13'' comprises a third gear wheel 13c rigidly connected to the torque or carried by the differential group 8 and meshing with the second gear wheel 13b.

The differential group 8 is advantageously of the bevel gear type and comprises, as known per se, a plurality of satellites 8' driven by the third gear wheel 13c and meshing with a pair of bevel wheels 8a, 8b rigidly carried by the left-hand and right-hand drive shafts.

The differential lock system 11, as is known, is configured to block the action of the differential 8 by making the two drive shafts 4', 4" integral with each other by connecting one of the two drive shafts 4', 4" to the differential box itself.

In the embodiment shown, the differential lock system 11 essentially comprises a sleeve 11b, which is carried slidingly along the axis A by the hub 11a and thus by the right drive shaft 4" via a fit connection, such as a splined connection, and is movable due to the action of actuator means, not shown.

The sleeve 11b further defines a toothing 11c configured to cooperate selectively according to its movement along the axis A with a toothing obtained on a portion 17 integral with the carrier 7a, that is to the differential group box 8.

The wheel hub transfer system 9 (if present) can be manufactured as required and in different ways and therefore is not described further for brevity.

Similarly, the parking lock system 12 can be made in different shapes and on different operating portions of the axle 1 and therefore is not described further for brevity.

The operation of the embodiment of the electric traction axle/beam 1 according to the embodiment of the invention described above is as follows.

In a first operating condition, in which the electric machine 2 acts as an electric motor, it supplies torque to the first transfer system 5, which transfers the torque, increasing its value and therefore reducing the rotation speed, to the input shaft 15. Depending on the position of the sleeve 6a, the torque is transferred directly to the carrier 7a and therefore to the differential 8 (by-passing the second reduction system 7), or its value is further varied by passing through the first sungear 7' or second sungear 70' with the related satellites to the carrier 7a. From here, the torque passes through the additional transfer system 13 which transfers the torque, advantageously increasing its value and thus reducing the rotation speed, to the differential group 8. From the differential group 8, as is known, it is divided between the drive shafts 4', 4'' and therefore through the wheel hub transfer systems 9 (if present) to the wheels 3. If necessary, the differential group can be locked by the differential lock system 11.

In a second operating configuration, in which the electric machine 2 acts as an electric generator, the torque is supplied by the wheels 3 driven by the motion of the vehicle and follows the same transmission chain as described above, in the opposite direction, up to the electric machine 2 which therefore generates electrical energy starting from the received input torque.

The advantages of an electric traction axle/beam according to the invention are clear from the foregoing.

Thanks to the proposed axle/beam 1 it is possible to provide an E-axle/E-beam with reduced longitudinal dimensions while maintaining a high level of torque/power deliverable by the electrified axle/beam.

In detail, the proposed reduction systems enable a high transmission ratio between the electric machine and the wheel hubs in a longitudinally and radially compact way in relation to the axis of the drive shafts.

Furthermore, the off-axis configuration allows the electric machine to be conveniently housed outside the space containing the transmission elements, facilitating the assembly and lubrication thereof.

Lastly, it is clear that modifications and variations may be made to the electric traction axle/beam according to the present invention, without however departing from the scope of protection defined by the claims.

Clearly, the coaxial transfer assembly of the compound type described herein can be replaced by and/or combined with coaxial transfer gear trains, even of the epicyclic type, which can be single or combined in series with each other and arranged differently than described herein, just like the other gears and selectors.

Alternatively, the gear shifting system can be made with quick-engagement teeth of the front type (dog clutch), of the radial type (splined), with friction elements or with synchronizing elements relatively to the above description. In particular, clutches with power-shifting functions may be used.

Similarly, the actuators and wheel hub transfer systems can be manufactured differently.

In particular, the actuator elements can be made in various ways, for example by means of: pistons, drums, actuator levers which can be electric, air-driven, oil-driven, electromagnetic, of the coaxial or remote type, rotary or linear, with stable or monostable control, etc.

In addition, the wheel hub reduction systems, if present, may be coaxial between the axis of the drive shafts and the wheels, or off-set (spacing with parallel axes), creating "portal" type architectures designed to increase the free distance between the axle of the differential (and therefore of the transmission) and the ground.

## Claims

1. **-** An electric traction axle/beam, e-axle/e-beam, (1) for a vehicle, said e-axle/e-beam (1) comprising at least one electric machine (2), a pair of drive shafts (4', 4"), each connected to a respective wheel, and a transmission chain operationally connecting said at least one electric machine (2) to said pair of drive shafts (4', 4''),
said transmission chain comprising operationally interposed in series between said at least one electric machine (2) and said pair of drive shafts (4', 4") a first transfer system (5), a second transfer system (7), a third transfer system (13) and a differential group (8),
said drive shafts (4', 4'') being coaxial to a longitudinal axis (A) of said axle (1), said electric machine (2) insisting on an axis (A) parallel and distinct from said longitudinal axis (B), said electric machine (2) being placed coaxially outside said drive shafts (4', 4")
said transmission chain further comprising at least one speed ratio change system (6) operationally interposed between said first transfer system (5) and said second transfer system (7).

2. - The E-axle/E-beam according to claim 1, wherein said electric machine (2) drives an operating shaft (2') operatively connected by said first transfer system (5) to an input shaft (15) and operationally connected to said second transfer system (7) via said speed ratio change system (6), said first transfer system (5) being a transfer system with parallel shafts defining at least one speed step (5', 5'') between said operating shaft (2') and said input shaft (15) .

3. **-** The E-axle/E-beam according to claim 1 or 2, wherein said second transfer system (7) is of the epicyclic type, comprising a sungear (7'), a crown (7‴) and a plurality of satellites (7'') meshing between said sungear (7') and said crown (7‴) and connected by a carrier (7a), said carrier (7a) being operationally connected to said differential group (8).

4. **-** The E-axle/E-beam according to claim 3, wherein said speed ratio change system (6) comprises a sleeve (6a) carried movably along said axis (A) by said input shaft (15) and provided with a toothing (6') configured to be selectively operationally connected to respective toothings (7b, 7c) integral with said carrier (7a) and said sungear (7'), respectively.

5. **-** The E-axle/E-beam according to one of claims 3 or 4, wherein said sungear (7') is coaxial to said axis (B).

6. **-** The E-axle or E-beam according to claim 4 or 5 when dependent on 5, wherein said sleeve (6a) is coaxial to said axis (B).

7. **-** The E-axle/E-beam according to one of the previous claims dependent on claim 3, wherein said transfer system (7) includes a second sungear (70') and a second plurality of satellites (70") meshing with said second sungear (70') and rigidly connected to said satellites (7') and being carried by the carrier (7a).

8. **-** The E-axle/E-beam according to claim 5 in combination with claim 7, wherein said toothing (6') of said sleeve (6a) is also configured to be selectively operationally connected to a respective toothing (7c') integral with said second sungear (70').

9. **-** The E-axle/E-beam according to one of the previous claims, wherein said third transfer system (13) is a transfer system with parallel shafts defining at least one speed step between said carrier shaft (7a) and said differential group (8) .

10. **-** The E-axle/E-beam according to one of the previous claims, wherein said differential group (8) includes a plurality of satellites (8') driven by said third transfer system (13) and meshing with a first and a second bevel wheel (8a, 8b) carried by a respective drive shaft (4', 4'').

11. **-** The E-axle or E-beam according to one of the previous claims, comprising a differential lock system (11) configured to inhibit the function of said differential group (8) .

12. **-** The E-axle/E-beam according to one of the previous claims, further comprising optional wheel hub transfer systems (9) operationally interposed between each wheel (3) and the respective drive shaft (4', 4'').

13. **-** The E-axle/E-beam according to one of the previous claims, further comprising a parking brake system (12) configured to operationally cooperate with at least one of the second transfer system (7), said third transfer system (13) and/or the differential group (8) to block the movement of said E-axle/E-beam (1).

14. **-** The E-axle/E-beam according to one of the previous claims, comprising a casing suitable for supporting said electric machine (2), said drive shafts (4', 4') and defining a space separated from the external environment to house said first transfer system (5), said at least one speed ratio change system (6), said second transfer system (7), said third transfer system (13) and said differential group (8).

15. The E-axle/E-beam according to one of the previous claims, comprising a system for disconnection of said drive shafts (4', 4'').

16. **-** A vehicle provided with an E-axle/E-beam according to one of the previous claims.
